(19) Europäisches Patentamt / European Patent Office / Office européen des brevets

(11) **EP 3 159 165 B1**

(12) **EUROPEAN PATENT SPECIFICATION**

(45) Date of publication and mention
of the grant of the patent:
**07.10.2020 Bulletin 2020/41**

(51) Int Cl.:
*B65D 23/02* (2006.01)     *B32B 17/06* (2006.01)
*B32B 27/06* (2006.01)     *B32B 33/00* (2006.01)
*C09D 201/00* (2006.01)     *B65D 85/00* (2006.01)
*B65D 39/00* (2006.01)     *B65D 21/00* (2006.01)
*B65D 17/00* (2006.01)     *B65D 1/00* (2006.01)
*B65B 1/00* (2006.01)     *C09D 7/40* (2018.01)
*C09D 7/65* (2018.01)     *B65D 1/02* (2006.01)

(21) Application number: **15809434.2**

(22) Date of filing: **20.04.2015**

(86) International application number:
**PCT/JP2015/062018**

(87) International publication number:
**WO 2015/194251 (23.12.2015 Gazette 2015/51)**

(54) **STRUCTURE PROVIDED WITH LIQUID FILM FORMED ON SURFACE THEREOF AND COATING SOLUTION FOR FORMING LIQUID FILM**

STRUKTUR MIT EINEM FLÜSSIGKEITSFILM, DER AUF EINER OBERFLÄCHE DAVON GEFORMT WIRD, UND BESCHICHTUNGSLÖSUNG ZUR FORMUNG DES FLÜSSIGKEITSFILMS

STRUCTURE AVEC FORMATION DE FILM LIQUIDE EN SURFACE, ET LIQUIDE DE REVÊTEMENT POUR FORMATION DE FILM LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014 JP 2014126877**

(43) Date of publication of application:
**26.04.2017 Bulletin 2017/17**

(73) Proprietor: **Toyo Seikan Co., Ltd.**
**Tokyo 141-8640 (JP)**

(72) Inventors:
• **OKADA, Yoshiaki**
**Yokohama-shi**
**Kanagawa 230-0001 (JP)**
• **MIYAZAKI, Tomoyuki**
**Yokohama-shi**
**Kanagawa 230-0001 (JP)**
• **NYUU, Keisuke**
**Yokohama-shi**
**Kanagawa 230-0001 (JP)**

(74) Representative: **J A Kemp LLP**
**14 South Square**
**Gray's Inn**
**London WC1R 5JJ (GB)**

(56) References cited:
EP-A1- 0 332 172          WO-A1-2013/077380
WO-A1-2014/010534          WO-A1-2014/175378
JP-A- H08 113 244          JP-A- 2002 087 420
JP-A- 2008 036 492          JP-A- 2010 254 377
JP-A- 2013 159 344          US-A1- 2014 116 465

**Description**

Technical Field:

This invention relates to a structure having a liquid film on the surface thereof. More specifically, the invention relates to a structure that exhibits improved sliding property to the fluid substance due to the liquid film and to a coating solution for forming the liquid film.

Background Art:

The containers for containing liquid contents must be capable of favorably discharging the contents irrespective of the materials forming the containers. Discharging the content is not almost of a problem when the liquids having low viscosity such as water and the like are contained. Discharging the content, however, becomes a serious problem when the content is a highly viscous substance such as mayonnaise or ketchup irrespective of the plastic container or the glass container. Namely, the contents of this kind are not quickly discharged despite the container is tilted. Besides, the contents tend to stay on the container wall and cannot be all recovered. Particularly, the content stays in considerable amounts on the bottom of the container and is not all recovered.
In recent years, there have been proposed various kinds of technical arts for improving sliding properties to viscous substances by forming a liquid film on the surface of a base material (e.g., see patent documents 1 and 2).
According to the above technical arts, the sliding property can be strikingly improved as compared to the cases of adding an additive such as lubricant to the synthetic resin that forms the surface of the base material, and attention has now been paid thereto.
Here, even according to means for improving surface properties by forming the liquid film on the surface of the base material as described above, it is not still possible to effectively prevent the content from adhering on the bottom of the container. Therefore, it has been desired to further improve the sliding property.
There has, further, been proposed a container with fine particles of a hydrophobic oxide adhered on the inner surface thereof and featuring excellent non-adhering property (patent document 3).
However, the sliding property expressed by the above container is very weaker than that expressed by the container provided with the liquid film.
Besides, improving the sliding property to the above-mentioned fluid substances has been desired not only for the containers but also for the lid materials and for the members such as pipes for flowing viscous fluid substances.

Prior Art Documents:

Patent Documents:

    Patent document 1: WO2012/100099
    Patent document 2: WO2013/022467
    Patent document 3: JP-A 2010/254377

Outline of the Invention:

Problems that the Invention is to Solve:

It is, therefore, an object of the present invention to provide a structure having a liquid film on the surface thereof and exhibiting, due to the liquid film, further improved sliding property to fluid substances and, specifically, to viscous fluid substances.
Another object of the present invention is to provide a structure that exhibits further improved sliding property to the content and that can be favorably used as packing materials, namely containers.
A further object of the present invention is to provide a container that exhibits sliding property to the content, the sliding property being improved to such an extent that a viscous content is effectively prevented from adhering or remaining on the bottom portion.

Means for Solving the Problems:

According to the present invention, there is provided a container for containing a fluid substance, the container comprising a surface that comes into contact with said fluid substance and having, formed on said surface, a liquid film for improving sliding property to said fluid substance, the liquid film containing solid particles of particle size of not more than 300 $\mu$m that are dispersed, and capable of rolling, therein.

In the container of the present invention, it is desired that:

(1) A liquid forming the liquid film acquires angle of contact (20°C) of not more than 45° relative to the surface (underlying surface) that supports the liquid film and has viscosity (25°C) of not more than 100 mPa·s;
(2) The solid particles are organic particles;
(3) The solid particles are dispersed in an amount of 0.01 to 10 parts by mass per 100 parts by mass of a liquid that forms the liquid film;
(4) The liquid film is formed in an amount of 1.0 to 6.2 mg/cm$^2$ on the surface of the structure;
(5) The surface of the container is formed of a synthetic resin;
(6) The surface of the container is formed of glass; and
(7) The fluid substance has viscosity (25°C) of not less than 1260 mPa·s.

There is also disclosed herein a coating solution for forming a liquid film on the surface of a structure, the coating solution containing, as a dispersion medium, a liquid for forming the liquid film and, further, containing solid particles of particle size of 5 $\mu$m to 300 $\mu$m in an amount of 0.01 to 20 parts by mass per 100 parts by mass of the liquid that is the dispersion medium.

Effects of the Invention:

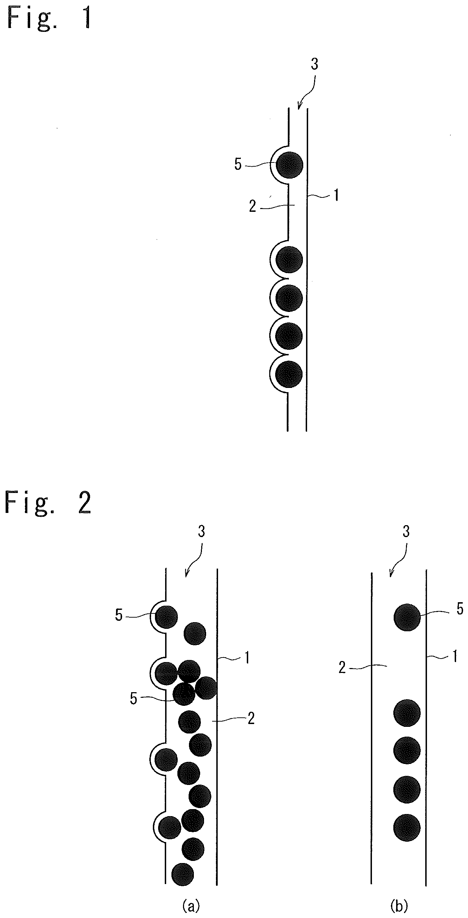

Referring to Fig. 1, the structure of the present invention has a surface structure in which a liquid film 3 is formed by using a liquid 2 on a surface 1 that comes in contact with a fluid substance, the liquid film 3 containing, dispersed therein, fine solid particles 5 of particle size of not more than 300 $\mu$m. Therefore, the fluid substance flowing on the surface 1 comes in contact with the liquid 2 that is present on the surfaces of the fine solid particles 5; i.e., greatly improved sliding property is exhibited to the fluid substance.

It has been known already that the sliding property to the content improves if a film of a liquid is formed on the surface of a packing material such as a container. If a viscous content is to be discharged from the packing material (e.g., container) having the above liquid film formed on the inner surface thereof, then the content is discharged from the packing material in liquid-liquid contact. That is, the content flows down along the inner surface of the packing material not in solid-liquid contact but in liquid-liquid contact. Therefore, if an oily liquid is used that is immiscible with the content, then the sliding property can be improved to an aqueous substance that contains water. Further, if an aqueous liquid is used that is immiscible with the content, then the sliding property can be improved to an oily substance.

Here, with the container of the present invention in which the fine solid particles 5 are dispersed in the liquid film 3, the sliding property is further improved to the fluid substance (i.e., to the content in the container) owing to the liquid film 3.

For example, as demonstrated in Experimental Examples appearing later, the mayonnaise-like food slides down more quickly when the fine solid particles (rice wax) are dispersed in the film of a liquid paraffin formed on the surface of a polypropylene sheet (for detailed conditions, refer to Examples) than when the film of the liquid paraffin (no solid particle has been dispersed) is formed on the surface of the polypropylene sheet.

As described above, the sliding property to the fluid substance further improves when the fine solid particles 5 are dispersed in the liquid film 3 because of the reasons which the present inventors presume as described below.

Namely, if the fluid substance (i.e., the content in the packing material such as a container) falls down in contact with the liquid film 3, the solid particles 5 serve as rollers and fall down rolling together with the fluid substance. It is, therefore, considered that the sliding property is further improved than when the liquid film 3 is simply formed. In fact, when the solid particles 5 are adhered on the surface 1 of the structure instead of being dispersed in the liquid film 3, the sliding property to the fluid substance changes little as compared to when the liquid film 3 is simply formed as also demonstrated in Experimental Examples appearing later. This is because, in this case, the solid particles are fixed on the surface 1 and do not serve as rollers.

If used, specifically, as a container such as a bottle, the structure of the present invention works to greatly suppress the content from adhering and remaining on the bottom portion in addition to exhibiting improved sliding property to the content.

For instance, in Experimental Examples appearing later, the bottles filled with a mayonnaise-like food (viscosity: 1260 mPa·s@25°C) as the content have been evaluated for the adhesion of food on the bottom portion. In the bottles in which the fine solid particles are dispersed in the liquid film formed on the inner surfaces according to the present invention, it is learned from the results of the tests that adhesion of the mayonnaise-like food has been greatly suppressed.

As for the reason why the content is effectively suppressed from adhering or remaining on the bottom portion, the present inventors consider that even after the content has slipped down, the solid particles 5 still work to hold the liquid film 3 on the surface 1 and are still held on the surface 1 (inner surface of the container) . As a result, the inventors consider that the liquid film 3 held on the surfaces of the solid particles 5 is effectively held on the bottom portion of the container. That is, in case the liquid film 3 is simply formed containing no fine solid particle 5 dispersed therein, if the container is inverted or is tilted, the liquid film 3 (liquid 2) splits away due to its own weight from the surface 1 (inner surface of the container) of the structure. As a result, the sliding property to the content greatly decreases on the bottom portion. In the present invention, however, the liquid film 3 (liquid 2) in which the solid particles 5 are dispersed is firmly held on the surface 1 (inner surface of the container) of the structure, and the sliding property is stably exhibited in the bottom portion, too.

Further, if the container is inverted or tilted to discharge the content out of the container, part of the liquid film 3 and part of the solid particles 5 fall down and are discharged together with the content. If the container is returned back to the erected state, however, the solid particles 5 holding the liquid film 3 on the surfaces thereof less tend to slip down than the content. Namely, the solid particles 5 stay on the bottom portion of the container and work again to exhibit excellent sliding property when the content is discharged next time.

Upon selecting a suitable kind of liquid for forming the liquid film 3 and selecting a suitable kind of fine solid particles 5 that are to be dispersed in the liquid film 3, the container of the present invention can be favorably used for containing viscous contents that could not be smoothly discharged so far. Specifically, the container of the present invention can be most favorably used for containing the contents having viscosity (25°C) of not less than 1260 mPa·s, such as mayonnaise, ketchup and a variety of kinds of dressings.

The liquid film 3 can be easily formed on the surface of the structure (e.g., on the inner surface) of the present invention by applying a coating solution for forming the liquid film to the surface of the structure by coating method such as spraying, the coating solution containing, as a dispersion medium, a liquid for forming the liquid film and, further, containing solid particles of particle size of 5 $\mu$m to 300 $\mu$m in an amount of 0.01 to 20 parts by mass per 100 parts by mass of the liquid that is the dispersion medium.

Brief Description of the Drawings:

[Fig. 1] is a model view illustrating the state of a liquid film formed on the surface of a structure.
[Fig. 2] is a model view illustrating the state of the liquid film in a case when the solid particles are dispersed too much in the liquid film (Fig. 2(a)) and in a case when the solid particles are dispersed too little (Fig. 2(b)).
[Fig. 3] is a view showing a direct blow-formed bottle which is a preferred embodiment of the structure of the present invention.
[Fig. 4] is a view illustrating conditions for testing the sliding property.

Modes for Carrying Out the Invention:

<Surface of the container>

Referring to Fig. 1, no particular limitation is imposed on the material for forming the surface 1 of the container of the present invention if it is capable of holding the liquid film 3 in which solid particles 5 described later are dispersed and, at the same time, if it can be formed to meet the mode of the container. Namely, the material may be a synthetic resin, glass or a metal. Specifically, for example, the container may be a synthetic resin container, a glass container, or a metal container.
From the perspective of effectively pouring viscous contents, it is desired that the present invention is adopted to a container of which the inner surface is formed of a synthetic resin or glass and, specifically, of which the inner surface is formed of the synthetic resin that has heretofore been used for containing viscous contents. Therefore, the material forming the inner surface 1 is, most desirably, a synthetic resin.
The synthetic resin desirable as a material for forming the surface 1 (hereinafter called underlying resin) may be any thermoplastic resin or thermosetting resin that can be formed. Usually, however, a thermoplastic resin is preferred from such a standpoint that it can be easily formed and that it is capable of stably holding the liquid film of an oily liquid and the solid particles that hold the liquid film on the surfaces thereof.
As the thermoplastic resin, there can be exemplified the following resins; i.e.,
olefin resins such as low-density polyethylene, high-density polyethylene, polypropylene, poly(1-butene), poly(4-methyl-1-pentene), and random or block copolymers of $\alpha$-olefins such as ethylene, propylene, 1-butene or 4-methyl-1-pentene, and cyclic olefin copolymers;
ethylene-vinyl copolymers such as ethylene-vinyl acetate copolymer, ethylene-vinyl alcohol copolymer and ethylene-vinyl chloride copolymer;

styrene resins such as polystyrene, acrylonitrile-styrene copolymer, ABS and $\alpha$-methylstyrene-styrene copolymer;

vinyl resins such as polyvinyl chloride, polyvinylidene chloride, vinyl chloride-vinylidene chloride copolymer, poly(methyl acrylate) and poly(methyl methacrylate);

polyamide resins such as nylon 6, nylon 6-6, nylon 6-10, nylon 11 and nylon 12;

polyester resins such as polyethylene terephthalate (PET), polybutylene terephthalate, polyethylene naphthalate and copolymerized polyesters thereof;

polycarbonate resins;

polyphenylene oxide resins; and

biodegradable resins such as polylactic acid and the like.

As a matter of course, it is also allowable to use a blend of the above thermoplastic resins as the underlying resin so far as it does not impair the formability.

In the invention, among the above thermoplastic resins, it is desired to use an olefin resin and a polyester resin that have been used as materials of containers for containing viscous contents, and it is most desired to use the olefin resin.

That is, as compared to the polyester resin such as PET, the olefin resin has low glass transition temperature (Tg) and shows high molecular mobility at room temperature . When an oily liquid film such as of edible oil is formed on the surface, therefore, the liquid forming the film partly infiltrates into the interior of the olefin resin which, therefore, stably holds the liquid film and the solid particles that also hold the liquid film on the surfaces thereof.

Besides, the olefin resin is highly flexible and is also used for direct blow-forming of the containers that can be squeezed (squeezable bottles). Therefore, the olefin resin is suitably used from the standpoint of adopting the invention to the containers of the above-mentioned type.

<Liquid film>

As the liquid 2 used for forming the liquid film 3 on the surface 1 of the structure, a suitable liquid is selected depending on the object (e.g., content in the container) to which the sliding property is exhibited by the surface 1. The liquid, as a matter of course, must be a nonvolatile liquid having a small vapor pressure under atmospheric pressure, such as a high-boiling liquid having a boiling point of not lower than 200°C. This is because if the volatile liquid is used, the liquid easily volatilizes and extinguishes with the passage of time making it difficult to form the liquid film 3.

Moreover, the liquid must have a high boiling point as described above and must, further, be immiscible with the fluid substance that flows on the surface 1. Further, the liquid must have high wettability to the surface 1 and must be capable of forming the liquid film 3 evenly on the surface 1. From these points of view, therefore, the liquid must acquire angle of contact (20°C) of, desirably, not more than 45° relative to the surface 1 and must have viscosity (25°C) of not more than 100 mPa·s. Namely, the liquid film 3 is formed by using the liquid 2 that satisfies the above-mentioned properties irrespective of if the material forming the surface 1 of the structure is a synthetic resin, glass or a metal.

Further, as for the liquid 2 that satisfies the above-mentioned properties, a liquid exhibits a high lubricating effect if it has a surface tension greatly different from that of the substance (i.e., content in the container) that is to slip down, and is suited for the present invention.

For example, to improve the sliding property to water or a hydrophilic substance that contains water, it is desired to use an oily liquid having a surface tension lying in a range of 10 to 40 mN/m and, specifically, 16 to 35 mN/m. Representative examples are liquid paraffin, synthetic paraffin, fluorine-containing liquid, fluorine-containing surfactant, silicone oil, fatty acid triglyceride and various plant oils. As the plant oils, there can be preferably used soybean oil, rape oil, olive oil, rice oil, corn oil, safflower oil, sesame oil, palm oil, castor oil, avocado oil, coconut oil, almond oil, walnut oil, hazel oil, salad oil, and the like.

In the invention, further, it is desired that the liquid film 3 in which the solid particles 5 are dispersed is formed on the inner surface 1 of the packing material in an amount of 1.0 to 6.2 mg/cm$^2$. If the amount thereof is too small, the liquid film 3 loses stability in exhibiting the effect for improving the sliding property. If the amount thereof is too large, on the other hand, the amount of the liquid film 3 loses stability and, besides, the fine solid particles 5 may fail to work as rollers as will be described later.

<Fine solid particles>

In the invention, the solid particles 5 to be dispersed in the liquid film 3 do not dissolve in the liquid 2 that forms the liquid film 3, are present therein in a solid form and do not, either, dissolve in a fluid substance (i.e., content in the container) that flows on the structure 1. Here, it is essential that the solid particles 5 are fine particles having particle size (median diameter of particles) of not more than 300 $\mu$m and, preferably, not more than 100 $\mu$m. If the particle size is too large, the particles may fail to roll to a sufficient degree and may fail to exhibit the effect of improving the sliding property to a sufficient degree. It is, further, desired that the particle size is not less than 5 $\mu$m from such a viewpoint that the particles are homogeneously dispersed in the structure 1 without being aggregated.

Further, the solid particles 5 remain in a solid form when the liquid film is being formed and, therefore, should have a melting point of not lower than 40 degrees.

There is no specific limitation on the material of the solid particles 5 which, therefore, may be formed by using any kind of organic material or inorganic material. From the standpoint of being held on the surface 1 of the structure and affinity to the liquid 2 that forms the liquid film 3, however, it is desired that the solid particles 5 are rather organic particles than inorganic particles such as metal particles or metal oxide particles. Desirably, the particles are formed of, for example, olefin wax, rice wax, carnauba wax, various celluloses and cured organic resin (e.g., cured product obtained by curing a polyfunctional acrylic monomer). Specifically, the rice wax and the like are desired from such a standpoint that they can be used for the contents that are foods without limitation.

In the present invention, it is desired that the solid particles 5 are dispersed in the liquid film 3 in an amount of 0.01 to 10 parts by mass and, specifically, 0.1 to 5 parts by mass per 100 parts by mass of the liquid that forms the liquid film 3 from such a standpoint that the solid particles roll well to exhibit rolling property to a sufficient degree and that they are held on the inner surface 1 of the packing material while holding the liquid film 3 on the surfaces thereof. For instance, as shown in the model view of Fig. 2(a), if the amount of the solid particles 5 is too large, the solid particles 5 undergo the aggregation and fail to improve the sliding property to a sufficient degree. Further, as shown in the model view of Fig. 2(b), if the amount of the liquid is too large, the solid particles 5 cannot roll well to exhibit improved sliding property. Besides, the solid particles 5 cannot be sufficiently held on the bottom portion; i.e., the solid particles 5 holding the liquid film 3 on the surfaces thereof are liable to be extinguished. Therefore, the effect becomes insufficient for suppressing the adhesion and stay of the content on the bottom portion.

In the invention, further, the liquid film 3 in which the solid particles 5 are dispersed can be easily formed on the surface 1 of the structure by preparing a coating solution by mixing a predetermined amount of solid particles 5 having a predetermined particle size in the liquid 2 that forms the liquid film 3 with stirring, and applying the coating solution to the surface 1 of the container by spraying, dipping, and the like.

<Form of the structure>

The structure of the present invention is adapted to the packing materials and is, more specifically, used in the form of, for example, a synthetic resin container, a glass container, or a metal container.

Further, in the case of a container having an inner surface made of a synthetic resin, the structure may be a single-layer structure with which the container as a whole is formed while using the synthetic resin to form the inner surface thereof, or may be a laminated-layer structure including layers of other synthetic resins.

Specifically, when the inner surface is formed of an olefin resin or a polyester resin, there can be employed the multi-layer structure including an oxygen-barrier layer or an oxygen-absorbing layer laminated via a suitable adhesive resin layer as an intermediate layer and, further, including, on the outer surface side, a layer of the same resin as the underlying resin (olefin resin or polyester resin) that is forming the inner surface.

The oxygen-barrier layer in the multi-layer structure is formed of an oxygen-barrier resin such as ethylene-vinyl alcohol copolymer or polyamide, and the oxygen-barrier resin may be, further, blended with other thermoplastic resins so far as the oxygen-barrier property is not impaired.

As described in JP-A-2002-240813 and the like, the oxygen-absorbing layer includes an oxidizable polymer and a transition metal catalyst. Due to the action of the transition metal catalyst, the oxidizable polymer is oxidized with oxygen; i.e., oxygen is absorbed and transmission of oxygen is shut off. The oxidizable polymer and the transition metal catalyst have been closely described in the above JP-A-2002-240813 and are not described here in detail. If described, however, representative examples of the oxidizable polymer are olefin resins having tertiary carbon atoms (e.g., polypropylene, polybutene-1, or copolymers thereof), thermoplastic polyester, aliphatic polyamide, xylene group-containing polyamide resin, and ethylenically unsaturated group-containing polymers (e.g., polymers derived from polyene, such as butadiene, etc.). As the transition metal catalyst, there can be exemplified inorganic salts of transition metals such as iron, cobalt, nickel, etc., organic acid salts thereof and complexes thereof.

Adhesive resins used for adhering the layers have been known per se., and examples thereof include olefin resins graft-modified with a carboxylic acid such as maleic acid, itaconic acid or fumaric acid or with an anhydride thereof, or with an amide or ester; ethylene-acrylic acid copolymer; ionically crosslinked olefin copolymer; and ethylene-vinyl acetate copolymer.

Thicknesses of the above layers may be suitably set depending on the properties required for the layers.

It is, further, allowable to provide, as an inner layer, a reground resin layer using a blend of a virgin resin such as an olefin resin and scraps such as burrs generated during the formation of the multi-layer structure. Or in the container having the inner surface (surface 1 of the above-mentioned structure) formed from the olefin resin or the polyester resin, it is also allowable, as a matter of course, to form an outer surface thereof using the polyester resin or the olefin resin.

There is no specific limitation on the shape of the container, either. Namely, the container may assume the form depending on the material forming the container, such as a cup, a bottle, a bag (pouch), a syringe, a pot, a tray, etc., and may have been stretched.

Specifically, in the case of a synthetic resin container, a preform having the inner surface is formed by a method known per se., is subjected to the after-treatments such as sticking a film thereto by heat-sealing and vacuum forming such as plug assist forming or blow-forming to form a container. Further, as briefly described earlier, the coating solution obtained by dispersing the solid particles 5 in the liquid that forms the liquid film 3 is sprayed onto the container to form the liquid film 3 in which the solid particles have been dispersed. Depending on the form of the container, however, the coating solution is applied by using a roller, a knife coater, and the like to form the liquid film 3 on the inner surface of the container.

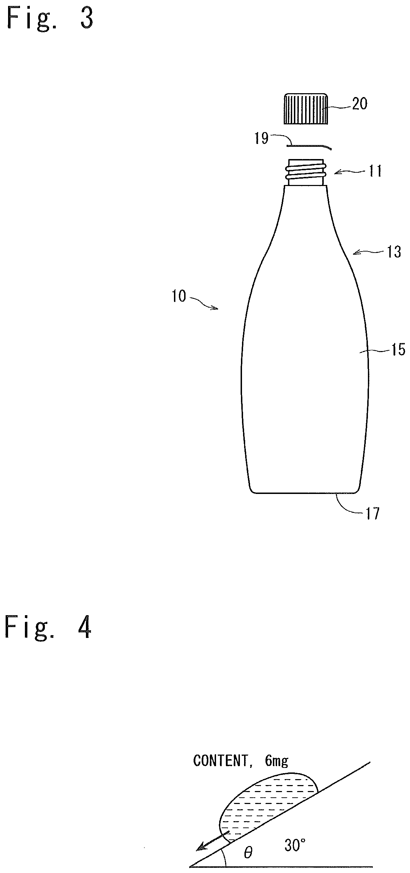

Fig. 3 shows a direct blow-formed bottle which is the most preferred embodiment of the structure of the present invention.

In Fig. 3, the bottle generally designated at 10 includes a neck portion 1 having a screw thread, a body wall 15 continuous to the neck portion 11 via a shoulder portion 13, and a bottom wall 17 that is closing the lower end of the body wall 15. The above-mentioned liquid film is formed on the inner surface of the bottle 10 which is filled with, for example, a viscous content.

The above-mentioned structure of the present invention exhibits very excellent sliding property depending on the kinds of the liquid film 3 and the solid particles 5, and exhibits the effect of preventing the content from adhering and staying on the bottom portion. Therefore, the structure of the invention can be favorably used, specifically, as a container for containing viscous contents having viscosity (25°C) of not lower than 100 mPa·s. Specifically, if the liquid film 3 is formed by using the above-mentioned oily liquid, the structure of the invention is most desirably used as a bottle for containing viscous contents such as mayonnaise, ketchup, aqueous paste, honey, various sauces, mustard, dressing, jam, chocolate syrup, cosmetic such as milky lotion, liquid detergent, shampoo, rinse, etc.

EXAMPLES

The invention will now be described by way of the following Experimental Examples.

Described below are the container, lubricating liquids (liquids for forming the liquid film 3) and contents used in Examples and in Comparative Examples.

<Container>

(1) Sheet members

As sheet members, there were used a multi-layer sheet of a width of 75 mm and a length of 50 mm cut out from a multi-layer bottle that will be described later, and a glass plate of a width of 75 mm and a length of 50 mm.

(2) Bottle

There was used a direct blow-formed multi-layer bottle having a multilayer structure of the following layer constitution and having a capacity of 400 g.

Inner layer: low-density polyethylene resin (LDPE)
Intermediate layer: ethylene-vinyl alcohol copolymer (EVOH)
Outer layer: low-density polyethylene resin (LDPE) Adhesive layers (among the inner layer, intermediate layer and outer layer): acid-modified polyolefin

<Liquid film>

(1) Liquid (lubricating liquid) for forming the liquid film Edible oil A:

Salad oil to which medium-chain fatty acid is added (viscosity: 33 mPa·s (25°C), angle of contact: 18 degrees).

Edible oil B:

Salad oil to which no medium-chain fatty acid is added (viscosity: 80 mPa·s (25°C), angle of contact: 18 degrees).

(2) Solid particles

Rice wax.

Cellulose.

Coating solutions in which solid particles of specified particle size were dispersed were prepared by mixing solid particles into the above-mentioned liquids (lubricating liquids) used in Examples and Comparative Examples as shown in Table 1 and stirring them together. The coating solutions were uniformly applied in specified amounts onto the sheet materials of the containers and onto the inner surfaces of the bottles.

<Measurements>

Particle size of the solid particles;

Solid particles were mixed in an amount of 1% into the edible oil A, and the distribution of particle size was measured by the laser diffraction scattering method by using a particle size distribution measuring apparatus (LA-300 manufactured by HORIBA, Ltd.). A median diameter thereof was regarded to be particle size.

Angle of contact;

The inner surface of the container that is the multi-layer sheet of the sheet member was left to face upward, and 10 mg of an edible oil used as the lubricating liquid was dropped thereon. The angle of contact of the lubricating liquid was measured by using an instrument for measuring contact angle (Drop Master 700 manufactured by Kyowa Interface Science Co., Ltd.) at 20°C, 50%RH.

Viscosity;

A liquid was introduced into a beaker, and a spindle and a guard of a B-type digital viscometer were put into the liquid. While maintaining the temperature at 25°C, the spindle was turned at 10 rpm for one minute to measure the viscosity.

<Content>

An egg (50 g), 15 cc of vinegar and 2.5 cc of salt were mixed together and to which 150 cc of edible oil was, further, added to prepare a mayonnaise-like food for experiment. In Examples and Comparative Examples, the contents were prepared in required amounts and were used.
By using the contents of Examples and Comparative Examples, further, the sliding properties (sliding properties of the sheet members) and sliding properties of the bottom portions (bottles) were evaluated in a manner as described below.

<Evaluating the sliding properties>

The coating solution was applied to the sheet member which was thereafter held at an angle of 30 degrees (see Fig. 4). 6 Milligrams of the mayonnaise-like food was dropped thereon, and the time was measured until it moved 5 cm. The sliding properties were evaluated on the following basis.

◎: Moved in less than 14 seconds.
○: Moved in not less than 14 seconds but less than 18 seconds.
△: Moved in not less than 18 seconds.
×: Not slipped down for not less than 60 seconds.

<Evaluating the sliding properties on the bottom portion of the containers>

A spray nozzle was inserted in the bottle up to the bottom thereof and was pulled up while spraying the coating solution so that the coating solution was applied to the whole side wall surfaces starting from the bottom portion of the bottle. Into the bottle having the liquid film with the solid particles dispersed therein formed on the inner surface thereof, 400 g of the content or the mayonnaise-like food was introduced in a customary manner. The mouth portion of the bottle was heat-sealed with an aluminum foil and was sealed with a cap to obtain a filled bottle.

The bottle filled with the content was stored at 23°C for one week. The bottle stored for one week was pressed on its body portion, and the content was squeezed out up to its last drip through the mouth portion of the bottle. Thereafter, the air was introduced into the bottle to restore its original shape.

Next, the bottle was inverted (mouth portion down) and was stored for one hour. Thereafter, the body wall of the bottle was measured in regard to what extent the content has slid down (to what extent the content has no longer been adhered to the body wall portion). The content slide-down ratio was calculated in compliance with the following formula.

$$\text{Content slide-down ratio (\%)} = (\text{surface area on which} \\ \text{the content is sliding down/surface area of} \\ \text{the body wall of the bottle}) \times 100$$

From the content slide-down ratios calculated above, the sliding properties were evaluated on the following basis.

○: The content slide-down ratio is not less than 90%.
Δ: The content slide-down ratio is not less than 50% but is less than 90%.
×: The content slide-down ratio is less than 50%.

[Examples 1 to 6]

By using the multi-layer sheet as the material for forming the inner surface of the packing material, coating solutions obtained by dispersing the rice wax (particle size of 100 $\mu$m) in the edible oil A (lubricating liquid) were applied thereon at solid particle dispersion ratios and in amounts as shown in Table 1, and the sliding properties were evaluated.

[Example 7]

By using the multi-layer sheet as the material for forming the inner surface of the packing material, a coating solution was applied thereon in the same manner as in Example 1 but changing the solid particles into the rice wax (particle size of 50 $\mu$m) at a solid particle dispersion ratio and in an amount as shown in Table 1, and the sliding property was evaluated.

[Example 8]

By using the multi-layer sheet as the material for forming the inner surface of the packing material, a coating solution was applied thereon in the same manner as in Example 1 but changing the solid particles into the rice wax (particle size of 250 $\mu$m) at a solid particle dispersion ratio and in an amount as shown in Table 1, and the sliding property was evaluated.

[Example 9]

By using the multi-layer sheet as the material for forming the inner surface of the packing material, a coating solution was applied thereon in the same manner as in Example 1 but changing the lubricating liquid into the edible oil B at a solid particle dispersion ratio and in an amount as shown in Table 1, and the sliding property was evaluated.

[Example 10]

By using the multi-layer sheet as the material for forming the inner surface of the packing material, a coating solution was applied thereon in the same manner as in Example 1 but changing he solid particles into the cellulose (particle size of 120 $\mu$m) at a solid particle dispersion ratio and in an amount as shown in Table 1, and the sliding property was evaluated.

[Example 11]

By using the glass plate as a material for forming the inner surface of the packing material, the coating solution was applied thereon in the same manner as in Example 1 at a solid particle dispersion ratio and in an amount as shown in Table 1, and the sliding property was evaluated.

[Example 12]

By using the multi-layer bottle as the packing material, a coating solution obtained by dispersing the rice wax (particle size of 100 $\mu$m) in the edible oil A was applied thereon at a solid particle dispersion ratio and in an amount as shown in Table 1, and the sliding property on the bottom portion was evaluated.

[Example 13]

By using the multi-layer bottle as the packing material, a coating solution obtained by dispersing the rice wax (particle size of 50 $\mu$m) in the edible oil A was applied thereon at a solid particle dispersion ratio and in an amount as shown in Table 1, and the sliding property on the bottom portion was evaluated.

[Example 14]

By using the multi-layer bottle as the packing material, a coating solution obtained by dispersing the rice wax (particle size of 250 $\mu$m) in the edible oil A was applied thereon at a solid particle dispersion ratio and in an amount as shown in Table 1, and the sliding property on the bottom portion was evaluated.

[Comparative Examples 1 and 2]

By using the multi-layer sheet as the material for forming the inner surface of the packing material, a coating solution obtained by dispersing the rice wax (particle size of 100 $\mu$ m) in the edible oil A was applied thereon at solid particle dispersion ratios and in amounts as shown in Table 2, and the sliding properties were evaluated.

[Comparative Example 3]

By using the multi-layer sheet as the material for forming the inner surface of the packing material, a coating solution obtained by dispersing the rice wax (particle size of 350 $\mu$ m) in the edible oil A was applied thereon at a solid particle dispersion ratio and in an amount as shown in Table 2, and the sliding property was evaluated.

[Comparative Example 4]

By using the multi-layer sheet as the material for forming the inner surface of the packing material, the edible oil A was applied thereon in an amount as shown in Table 2, and the sliding property was evaluated.

[Comparative Example 5]

By using the multi-layer sheet as the material for forming the inner surface of the packing material, the rice wax applied thereon in an amount of 2.5 g and, thereafter, the edible oil A was applied thereon in an amount as shown in Table 2, and the sliding property was evaluated.

[Comparative Example 6]

By using the multi-layer sheet as the material for forming the inner surface of the packing material, the sliding property was evaluated but without applying the lubricating liquid.

[Comparative Example 7]

By using the multi-layer bottle as the packing material, the edible oil A was applied thereon, and the sliding property on the bottom portion was evaluated.

[Comparative Example 8]

By using the multi-layer bottle as the packing material, the sliding property on the bottom portion was evaluated but without applying the lubricating liquid.
Tables 1 and 2 show the results of evaluation in the above Examples and Comparative Examples.

In Tables 1 and 2, Ex. stands for Examples and Com. stands for Comparative Examples.

Table 1

| | Base material | Coating solution | | Coating weight (mg/cm$^2$) | *1 | Evaluation | |
| | | Lubricating liquid | Solid particles | | | Sliding down | Sliding property on bottom |
|---|---|---|---|---|---|---|---|
| Ex. 1 | multi-layer sheet | edible oil A | *2 (*4, 100 μm) | 2.4 | 3 | ◎ | - |
| Ex. 2 | ↑ | ↑ | ↑ | 1 | 3 | ○ | - |
| Ex. 3 | ↑ | ↑ | ↑ | 6.2 | 3 | ○ | - |
| Ex. 4 | ↑ | ↑ | ↑ | 2.4 | 0.01 | ○ | - |
| Ex. 5 | ↑ | ↑ | ↑ | 2.4 | 5 | ◎ | - |
| Ex. 6 | ↑ | ↑ | ↑ | 2.4 | 10 | ○ | - |
| Ex. 7 | ↑ | ↑ | *2 (*4, 50 μm) | 2.4 | 3 | ○ | - |
| Ex. 8 | ↑ | ↑ | *2 (*4, 250 μm) | 2.4 | 3 | ○ | - |
| Ex. 9 | ↑ | edible oil B | *2 (*4, 100 μm) | 2.4 | 3 | ○ | - |
| Ex. 10 | ↑ | edible oil A | *3 (*4, 120 μm) | 2.4 | 3 | ○ | - |
| Ex. 11 | glass plate | ↑ | *2 (*4, 100 μm) | 2.4 | 3 | ○ | - |
| Ex. 12 | bottle | ↑ | ↑ | 2.4 | 3 | - | ○ |
| Ex. 13 | ↑ | ↑ | *2 (*4, 50 μm) | 2.4 | 3 | - | ○ |
| Ex. 14 | ↑ | ↑ | *2 (*4, 250 μm) | 2.4 | 3 | - | ○ |
| *1: solid particle dispersion ratio (g/100 g of liquid), *2: rice wax, *3: cellulose, *4: particle size | | | | | | | |

Table 2

| | Base material | Coating solution | | Coating weight (mg/cm$^2$) | *1 | Evaluation | |
| | | Lubricating liquid | Solid particles | | | Sliding down | Sliding property on bottom |
|---|---|---|---|---|---|---|---|
| Com. 2 | ↑ | ↑ | ↑ | 2.4 | 20 | Δ | - |
| Com. 3 | ↑ | ↑ | *2 (*3, 350 μm) | 2.4 | 3 | Δ | - |
| Com. 4 | ↑ | ↑ | - | 2.4 | - | Δ | - |
| Com. 5 | ↑ | edible oil A was applied after rice wax has adhered | | 2.4 | - | Δ | - |
| Com. 6 | ↑ | - | - | - | - | × | - |
| Com. 7 | bottle | edible oil A | - | 2.4 | - | - | Δ |

(continued)

| | Base material | Coating solution | | Coating weight (mg/cm$^2$) | *1 | Evaluation | |
| | | Lubricating liquid | Solid particles | | | Sliding down | Sliding property on bottom |
|---|---|---|---|---|---|---|---|
| Com. 8 | ↑ | - | - | - | - | - | × |
| *1: solid particle dispersion ratio (g/100 g of liquid), *2: rice wax, *3: particle size | | | | | | | |

Upon forming the liquid film in which the solid particles are dispersed on the inner surface of the sheet member and the bottle, improved sliding property is exhibited to the content. It will, therefore, be learned that the packing material exhibits excellent sliding property to the content if it has the liquid film formed on the inner surface thereof by applying the coating solution prepared by dispersing the solid particles in the liquid onto the inner surface thereof.

<Experimental Examples 1 to 4>

In compliance with the above Examples, the coating solutions shown in Table 3 were applied each in an amount of 0.6 cc onto the glass members (preparates) and were allowed to cover the whole surfaces thereof. Thereafter, the peparates were held vertically for 30 seconds and were returned to the horizontal state to measure the remaining ratios (%) of the coating solutions per the areas. The results were as shown in Table 3.

Table 3

| | Ratio of solid particles dispersed (g/100 g of liquid layer) | Remaining ratio (%) |
|---|---|---|
| Experimental Example 1 | 0 | 2 |
| Experimental Example 2 | 0.1 | 9 |
| Experimental Example 3 | 1 | 39 |
| Experimental Example 4 | 10 | 85 |

As will be obvious from Table 3, the higher the ratio of the solid particles in the liquid film, the higher the remaining ratio of the liquid film and the solid particles.

Though not shown in Table, if the ratio of the solid particles is too high in the liquid film, the solid particles may aggregate together and may hinder the content from sliding down or may infiltrate into the content. Therefore, the ratio thereof is, desirably, 0.01 to 10% and, specifically, 0.1 to 5%.

Description of Reference Numerals:

1:      inner surface of the structure
2:      liquid
3:      liquid film
5:      solid particles
10:     bottle
11:     neck portion
13:     shoulder portion
15:     body wall
17:     bottom wall

## Claims

1. A container for containing a fluid substance, the container comprising a surface that comes into contact with said fluid substance and having, formed on said surface, a liquid film for improving sliding property to said fluid substance, the liquid film containing solid particles of particle size of not more than 300 $\mu$m that are dispersed, and capable of rolling, therein.

2. The container according to claim 1, wherein a liquid forming the liquid film acquires angle of contact (20°C) of not more than 45° relative to the surface that supports the liquid film and has viscosity (25°C) of not more than 100 mPa·s.

3. The container according to claim 1, wherein the solid particles are organic particles.

4. The container according to claim 1, wherein the solid particles are dispersed in an amount of 0.01 to 10 parts by mass per 100 parts by mass of a liquid that forms the liquid film.

5. The structure according to claim 1, wherein the liquid film is formed in an amount of 1.0 to 6.2 mg/cm$^2$ on the surface of the container.

6. The container according to claim 1, wherein the surface of the container is formed of a synthetic resin.

7. The container according to claim 1, wherein the surface of the container is formed of glass.

8. The container according to claim 1, wherein the fluid substance has viscosity (25°C) of not less than 1260 mPa·s.

**Patentansprüche**

1. Behälter zum Enthalten einer Fluidsubstanz, wobei der Behälter eine Oberfläche, die in Kontakt mit der Fluidsubstanz kommt, umfasst und auf der Oberfläche gebildet, einen Flüssigkeitsfilm zum Verbessern der Gleiteigenschaft für die Fluidsubstanz hat, wobei der Flüssigkeitsfilm feste Partikel mit einer Partikelgröße von nicht mehr als 300 $\mu$m enthält, die darin dispergiert und zum Rollen fähig sind.

2. Behälter nach Anspruch 1, wobei eine Flüssigkeit, die den Flüssigkeitsfilm bildet, einen Kontaktwinkel (20 °C) von nicht mehr als 45° relativ zur Oberfläche, die den Flüssigkeitsfilm trägt, erlangt und eine Viskosität (25 °C) von nicht mehr als 100 mPa·s hat.

3. Behälter nach Anspruch 1, wobei die festen Partikel organische Partikel sind.

4. Behälter nach Anspruch 1, wobei die festen Partikel in einer Menge von 0,01 bis 10 Massenteilen pro 100 Massenteile einer Flüssigkeit, die den Flüssigkeitsfilm bildet, dispergiert sind.

5. Struktur nach Anspruch 1, wobei der Flüssigkeitsfilm in einer Menge von 1,0 bis 6,2 mg/cm$^2$ auf der Oberfläche des Behälters gebildet ist.

6. Behälter nach Anspruch 1, wobei die Oberfläche des Behälters aus einem Kunstharz gebildet ist.

7. Behälter nach Anspruch 1, wobei die Oberfläche des Behälters aus Glas gebildet ist.

8. Behälter nach Anspruch 1, wobei die Fluidsubstanz eine Viskosität (25 °C) von nicht weniger als 1260 mPa·s hat.

**Revendications**

1. Contenant pour contenir une substance fluide, le contenant comprenant une surface qui entre en contact avec ladite substance fluide et ayant, formé sur ladite surface, un film liquide pour améliorer la propriété coulissante pour ladite substance fluide, le film liquide contenant des particules solides de taille des particules non supérieure à 300 $\mu$m qui sont dispersées, et capables de rouler, dans celui-ci.

2. Contenant selon la revendication 1, dans lequel un liquide formant le film liquide acquiert un angle de contact (20°C) non supérieur à 45° relativement à la surface qui supporte le film liquide et une viscosité (25°C) non supérieure à 100 mPa·s.

3.  Contenant selon la revendication 1, dans lequel les particules solides sont des particules organique.

4.  Contenant selon la revendication 1, dans lequel les particules solides sont dispersées en une quantité de 0,01 à 10 parties en masse par 100 parties en masse d'un liquide qui forme le film liquide.

5.  Structure selon la revendication 1, dans laquelle le film liquide est formé en une quantité de 1,0 à 6,2 mg/cm$^2$ sur la surface du contenant.

6.  Contenant selon la revendication 1, dans lequel la surface du contenant est formée d'une résine synthétique.

7.  Contenant selon la revendication 1, dans lequel la surface du contenant est formée de verre.

8.  Contenant selon la revendication 1, dans lequel la substance fluide a une viscosité (25°C) non inférieure à 1260 mPa·s.

Fig. 1

Fig. 2

(a)                    (b)

Fig. 3

20

19

11

13

10

15

17

Fig. 4

CONTENT, 6mg

$\theta$ 30°

**REFERENCES CITED IN THE DESCRIPTION**

**Patent documents cited in the description**

- WO 2012100099 A
- WO 2013022467 A
- JP 2010254377 A
- JP 2002240813 A